Europäisches Patentamt

**European Patent Office**

Office européen des brevets

(19)

(11) Publication number: **0 185 455**
**A1**

(12) # EUROPEAN PATENT APPLICATION

(21) Application number: **85308232.9**

(22) Date of filing: **13.11.85**

(51) Int. Cl.⁴: **G 21 C 9/02**
**G 21 C 17/02**

(30) Priority: **13.11.84 US 670794**

(43) Date of publication of application:
**25.06.86 Bulletin 86/26**

(84) Designated Contracting States:
**BE DE FR GB IT SE**

(71) Applicant: **WESTINGHOUSE ELECTRIC CORPORATION**
**Westinghouse Building Gateway Center**
**Pittsburgh Pennsylvania 15235(US)**

(72) Inventor: **Segletes, John August**
**9201 Wedgewood Road**
**Pittsburgh Pennsylvania(US)**

(74) Representative: **van Berlyn, Ronald Gilbert**
**23, Centre Heights**
**London, NW3 6JG(GB)**

(54) **Method of controlling a PWR so as to prevent overpressurization in the event of feedwater loss.**

(57) A method of operating a pressurized water reactor wherein the loss of main feedwater flow is utilized to generate an activation signal which replaces the normal automatic or manual rod control and causes rod insertion at the maximum rate available to avoid a temperature rise which could result in overpressurization of the reactor coolant system.

EP 0 185 455 A1

./...

FIG. 1

## METHOD OF CONTROLLING A PWR SO AS
## TO PREVENT OVERPRESSURIZATION IN
## THE EVENT OF FEEDWATER LOSS

This invention relates to a method for operating a pressurized water reactor in a manner which prevents overpressurization in the event that the protection system fails to shutdown the reactor under abnormal operating conditions, and more particularly it is directed to such a method and apparatus which drives the control rods into the reactor core at maximum speed in response to a loss of main feedwater flow.

In a pressurized water reactor (PWR) electric power generating system, fission reactions in the reactor core generate heat which is absorbed by reactor coolant circulated through the core. The heated reactor coolant, is passed through the primary side of a steam generator where it releases heat before being returned to the reactor. The heat released by the reactor coolant is absorbed by main feedwater pumped into the secondary side of the steam generator to form steam which is applied to a turbine-generator set to generate electricity. Vitiated steam from the turbine is condensed in a condenser and returned to the steam generator as feedwater by a feedwater pump.

The load carried by the PWR is regulated by the turbine throttle valve, which when opened, draws more steam from the steam generator which in turn, draws more heat from the reactor coolant. The reactor coolant, which is light water, also serves as a moderator which slows the neutrons produced by the fission reactions in the core down to the velocities appropriate to effect continued fission reactions. Thus, as the temperature of the reactor coolant drops, and hence its density increases, more neutrons are slowed down to the critical velocity and therefore, the rate of fission increases to increase the heat produced by the reactor by the amount needed to meet the new load demand. The reactor is designed to operate at a programmed temperature which can be constant, but which usually increases with power level. The temperature of the reactor is maintained at the programmed value by control rods made of neutron absorbing material which may be inserted into and withdrawn from the reactor core to adjust the reactivity.

The pressurized water reactor is provided with a protection system which monitors numerous system parameters and shuts down, or scrams the reactor by dropping the control rods into the reactor core in the event that abnormal conditions are detected. While the protection system contains redundant trip paths which enhance reliability, conservative operation dictates that consideration be given to the consequences of possible failure of the protection system to shutdown or trip the reactor under various abnormal conditions that are expected to occur during the life of a plant. Such situations are known in the industry as anticipated transients without scram (ATWS).

An analysis of the ATWS problem has determined that for many scenarios, the standard safety criteria are satisfied by the response of safety features other than the reactor trip. On the other hand, ATWS scenarios in which there is a total loss of main feedwater can result in very high reactor coolant pressures. For these situations, it was assumed that an auxiliary feedwater system was put into operation. Even so, the auxiliary feedwater system is designed to accommodate heating rates associated with decay

**0185455**

heat produced when the reactor is shutdown whereas the heating rates can be many times greater during these ATWS transients. As a result, there is a rapid increase in reactor coolant temperature and pressure. For these cases, rupture of the reactor coolant system due to overpressurization is a distinct possibility.

It is the principal object of the present invention, therefore, to provide a method for automatically responding to an ATWS involving loss of main feedwater flow in such a manner that a large reactor coolant temperature transient and the associated overpressurization is avoided.

With this object in view, the present invention resides in a method of operating a pressurized water reactor electric power generating system in the event of failure of its main feedwater system, said reactor having control rods and means for incrementally stepping the control rods into and out of the reactor to regulate the operating temperature and hence water pressure of the reactor with its main feedwater system adapted to supply feedwater to be converted to steam by heat generated by the reactor, operation of the main feedwater system is monitored on a real time basis, an activation signal is generated in response to a predetermined abnormal low flow rate below a preselected valve in the main feedwater system and the control rods are stepped into the reactor at maximum speed in response to said activation signal.

The control rods are inserted into and withdrawn from the reactor core by drive units which advance or retract the rods in discrete steps in response to a pulse signal. The pulse signal is ordinarily generated as a function of the magnitude, and polarity, of a manual or automatic control signal. A loss of main feedwater flow generates an ATWS activation signal which replaces the manual or automatic control signal with a signal which generates pulses which step the rods into the reactor at the maximum rate possible. The present invention operates independently of the protection system so that if the latter does not trip the reactor in response to a loss of main feedwater flow, immediate action is taken to insert the rods using the rod jacking mechanism to avoid conditions which could lead to a reactor coolant system overpressurization. If the protection system does trip the reactor, the rods will be dropped fully into the core and the present invention is not needed or effective. Thus, it provides a backup to the protection system to assure that the reactor coolant pressure does not reach unacceptable levels.

The invention will become more readily apparent from the following description of a preferred embodiment thereof shown, by way of example only, in the accompanying drawings in which:

Figure 1 is a schematic diagram of a pressurized water reactor nuclear power plant incorporating the present invention;

Figure 2 is a plot of reactor coolant pressure versus time for the plant of Figure 1 without the present invention;

Figure 3 is a plot of reactor coolant pressure versus time for the plant of Figure 1 with the present invention in operation for the same conditions as those applicable to the plot of Figure 2; and

Figure 4 is a plot comparing for the plant of Figure 1 rod velocity as a function of time with and without the present invention in response to a loss of feedwater ATWS.

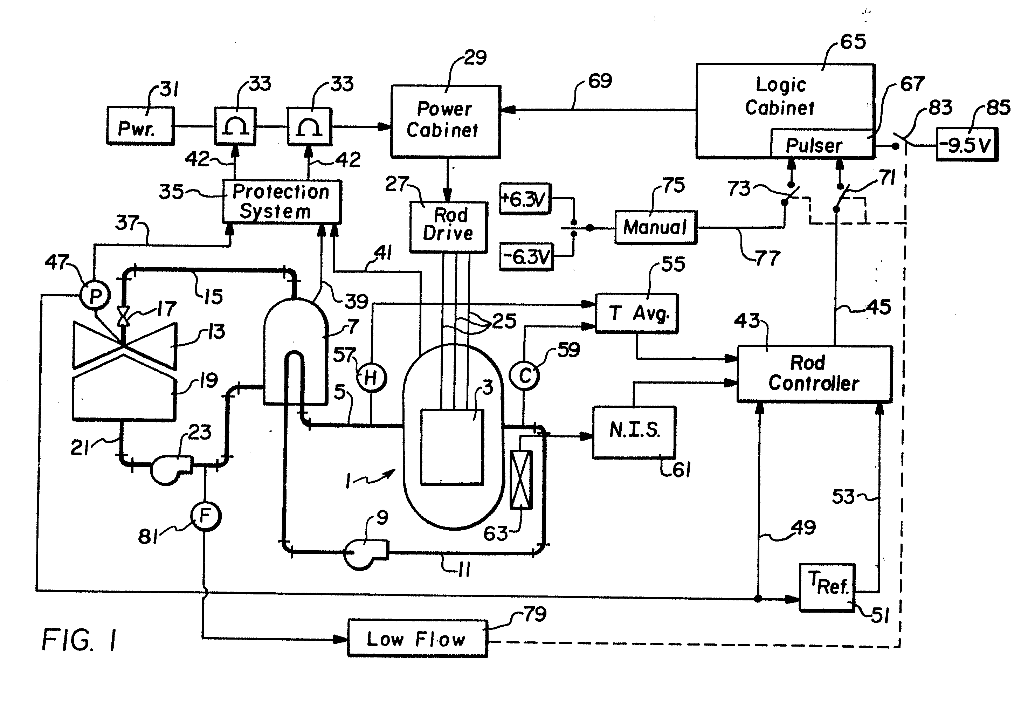

Figure 1 illustrates a pressurized water reactor (PWR) electric power generating system in which the nuclear reactor 1 includes a reactor core 3 containing fissile material. Fission reactions in the fissile material generate heat which is transferred by reactor coolant circulated through the core 3 and a hot leg 5 to the primary side of a steam generator 7. The heat in the reactor coolant is absorbed by feedwater on the secondary side of the steam generator 7 to generate steam. The cooled reactor coolant is returned to the reactor core 3 by a reactor coolant pump 9 through cold leg 11. The steam is supplied to a turbine-generator set 13 through conduit 15. A throttle valve 17 controls steam flow to the turbine and therefore controls the load on the reactor as discussed above. Steam exhausted from the turbine is condensed in condenser 19 and the condensate collected in the bottom of the condenser is returned to the steam generator as feedwater through conduit 21 by main feedwater pump 23. A typical PWR installation has two to four steam generators all supplied with heated reactor coolant from a common reactor and all supplying steam to a single turbine-generator set, although for simplification of the explanation, only a single steam generator is shown in Figure 1. Such installations are designated as two, three or four loop plants depending upon the number of steam generators. Each plant has two and sometimes three feedwater pumps 23 for returning condensate, and make up water as necessary, to all steam generators.

As previously mentioned, rods 25 made of neutron absorbing material are inserted into and withdrawn from the reactor core 3 for control purposes. Some of the rods are only used to shutdown the reactor and thus are fully withdrawn when the reactor is at power and are fully inserted when the reactor is shutdown. Other rods are used to bring the reactor up to power and to regulate reactor temperature at power. For purposes of this disclosure, the term "control rod" will be used to refer to both the rods used solely for shutdown and to the rods used to regulate power and temperature.

The control rods are inserted in and withdrawn from the reactor core by rod drive mechanisms 27 such as the magnetic jack units disclosed in U.S. Patent No. 3,158,766. These units advance or retract the control rods in incremental steps. The rods are held in place as long as electric power is applied to the magnetic jack units from power cabinets 29. If the power is interrupted, the magnetic jack units release the rods which then fall by gravity into the reactor to shut it down. This method of tripping the reactor is only used under emergency conditions requiring rapid, fail safe rod insertion. Under normal conditions, the reactor is shutdown by systematically, incrementally inserting the rods in a controlled sequence.

Power for the power cabinets 29 is supplied by a motor generator set 31 through two series connected sets of breakers 33. The breakers in turn, are controlled by the redundant protection system 35 which monitors numerous parameters throughout the plant as represented by the illustrative leads 37, 39 and 41 and generates trip signals on leads 42 to open the breakers and thereby shutdown the reactor should an abnormal plant condition be detected.

Normal insertion and retraction of the control rods 25 is controlled by a rod position controller 43. The controller 43 generates a control signal for automatic positioning of the rods on lead 45 as a function of several signals. As previously mentioned, the load on the reactor is determined by the setting of the throttle valve 17. The pressure in the impulse chamber of the turbine as measured by the pressure transducer 47 is an indication of the load and this load signal is applied to the controller 43 through lead 49. As also discussed earlier, the rods are positioned to maintain a predetermined reactor temperature profile. Normally the temperature is programmed to increase with power. A signal generator 51 generates a set point signal representative of the programmed temperature as a function of load for the controller 43 on lead 53. The controller 43 compares the set point temperature signal with the actual average temperature as calculated in the T Avg signal generator 55 from the hot and cold leg temperature as measured by transducers 57 and 59 respectively. The controller 43 also takes into account the reactor power level as calculated by the nuclear instrumentation system (NIS) 61 from the neutron flux measured by detector 63.

The control signal generated by the controller 43 on lead 45 is an error signal representing the difference between the actual and desired position of the control rods 25. This error signal is applied to the logic cabinet 65 which includes a pulser 67. The pulser 67 generates a pulse signal having a polarity determined by that of the applied signal and a pulse rate proportional to the magnitude of the applied signal. This pulse signal is applied through lead 69 to the power cabinet 29 which provides pulses of the appropriate polarity and repetition rate to the rod drive unit 27 to move the rods to the position called for by the controller 43.

Alternatively, the control rods can be positioned manually by opening a switch 71 and closing a switch 73 to replace the automatic control signal generated by the controller 43 with a manual signal produced by the MAN signal generator 75. While the controller 43 can generate a signal which varies in magnitude depending upon how far the rods must be moved, the MAN signal generator 75, which is controlled directly by the operator, applies to the pulser 67 over lead 77 either a +6.3 or -6.3 volt signal. Thus, under manual control, the rods are driven in or out at a predetermined fixed rate as long as the operator commands insertion or retraction.

In the event that, for some reason, abnormal conditions arise in the above described plant, the protection system 35 should detect them and, if conditions warrant, it should trip the reactor by tripping the breakers 33 to interrupt the power to the rod drive units 27 thereby causing the rods to be dropped into the reactor core. One such abnormal condition would be the loss of main feedwater flow to the steam generators. This could result from a loss of the main feedwater pumps due to the simultaneous failure of the pumps or their power supply, in the case of motor driven pumps. In some plants, the main feedwater pumps are turbine driven. In these installations, a turbine trip caused by a loss of condenser vacuum would result in a loss of the main feedwater pumps. Whatever the cause of the loss of main feedwater, the protection system should shut the reactor down. If it does not, the feedwater in the steam generator 7 is rapidly vaporized and there is no medium to absorb the heat in the reactor coolant in spite of the actuation of the auxiliary feedwater system. The temperature of the reactor coolant therefore, rises causing the pressure to rise, possibly leading to a rupture in the reactor coolant system.

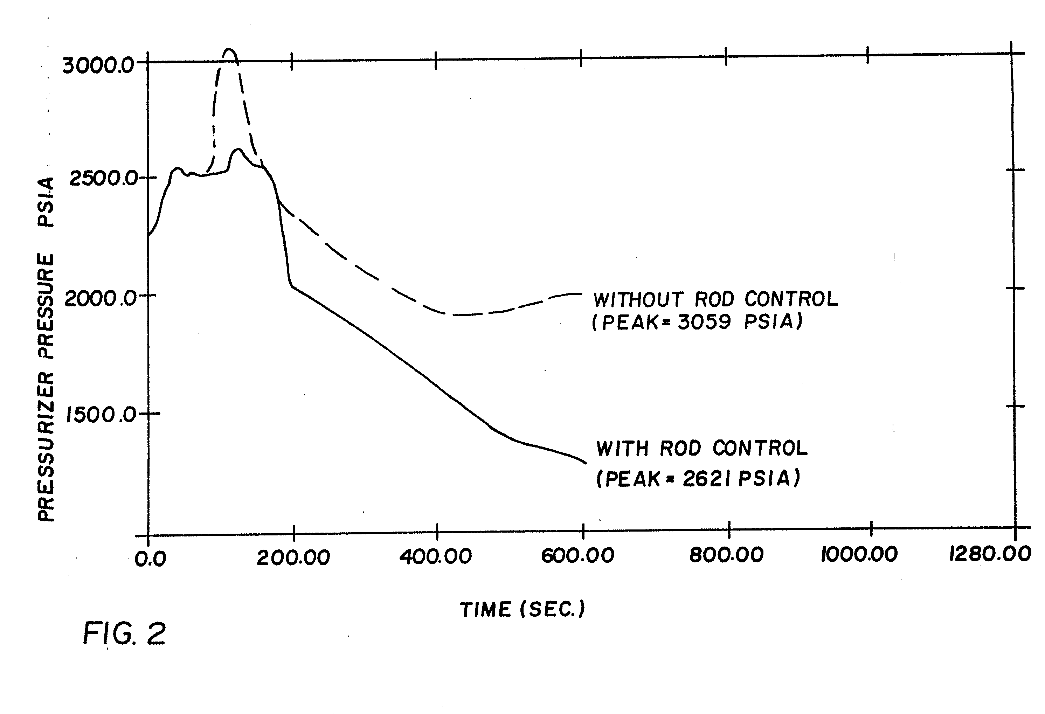

If the control system described above is in automatic, the rise in reactor coolant temperature resulting from a loss of main feedwater without a scram will result in the generation of a control signal by controller 43 which drives the rods into the reactor core at a rate which will increase as the temperature increases. Figure 2 is a plot of reactor coolant pressure as a function of time following the loss of feedwater with the reactor at 100% power and assuming that the power operated relief valves (PORV's) are inoperative. It is assumed that the moderator temperature coefficient is -4.4 PCM/°C, PCM is dimensionless, $10^{-5}$ reactivity. The moderator temperature coefficient will typically be less than -4.4 PCM/°C for 95% of core life. Therefore, the plot is conservative for 95% of the fuel cycle. As can be seen in the plot of Figure 2; with the rod control system in automatic as shown in the solid line and with the pressure initially at 158 kg/cm$^2$, the pressurizer pressure rises to around 176 kg/cm$^2$ and peaks at 185 kg/cm$^2$. Without rod control, as shown by the dashed line, the peak pressurizer pressure can rise to 216 kg/cm$^2$. Peak reactor coolant pressures will be approximately 2.1 to 3.5 kg/cm$^2$ higher than the pressurizer pressure. From Figure 2, it can be seen that the effect of rod insertion is to substantially lower the peak pressure for those ATWS scenarios involving loss of main feedwater.

With the present invention, further reductions in reactor coolant peak pressure are possible even if the system is in automatic control. It includes a LOW FLOW unit 79 which monitors main feedwater flow as measured by flow meters 81. Flow in each of the loops in a multiloop plant is monitored and a LOW FLOW signal is generated if the flows in all the loops are below a minimum value indicating that unacceptable peak pressures could be reached if the reactor is not shutdown. The LOW FLOW signal opens the normally closed switch 71 for the automatic control system, opens the manual control switch 73 if closed, and closes a switch 83 which applies a fixed -9.5 volt signal to the pulser 67 from signal generator 85. The magnitude and polarity of this fixed signal are such that pulses are generated at the maximum rate to drive the rods into the reactor core. In a typical PWR, this would be 72 pulses per minute which results in a rod insertion speed to about 113 cm per minute.

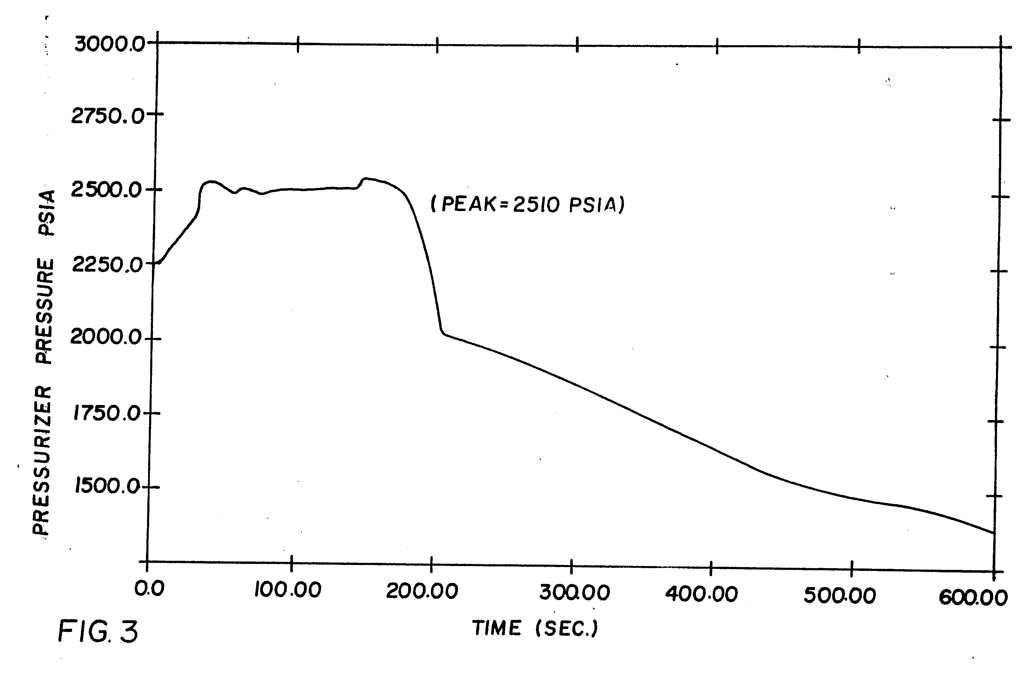

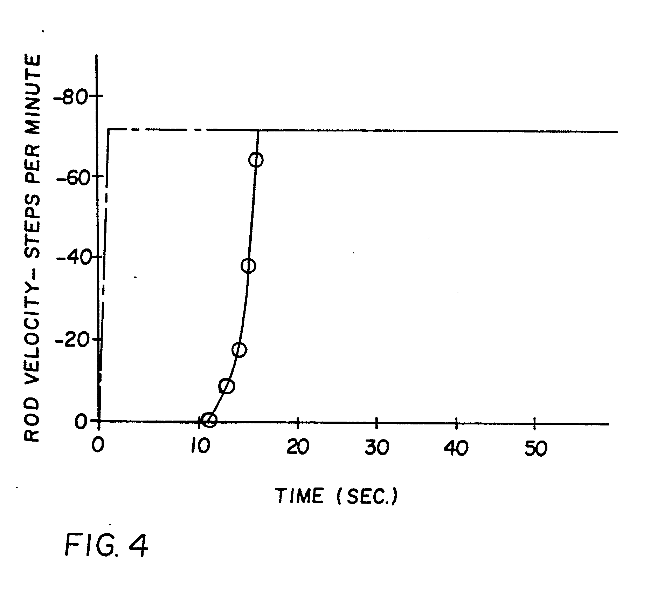

Figure 3 is a plot of coolant pressure versus time for the plant of Figure 1 using the LOW FLOW signal to initiate rod insertion at the maximum rate assuming 100% power, 158 kg/cm$^2$ initial pressure, -8 PCM/per degree fahrenheit moderator temperature coefficient and no reactor trip. Under these conditions, the maximum pressurizer pressure is about 177 kg/cm$^2$ whether the rod control system was on automatic or manual at the time of the ATWS event. Figure 4 is a plot of rod velocity versus time following a loss of main feedwater ATWS for automatic control assuming a -8 PCM per degree fahrenheit moderator temperature coefficient shown in solid line, and for the present invention using the LOW FLOW signal shown in the chain line. As can be seen from this figure, the present invention reacts immediately with the maximum rate of response to the abnormal condition, while there is a delay in the response of the automatic rod control system until it senses a rise in coolant temperature and its rate of response takes several seconds more to reach the maximum

**0185455**

rate. Although it is preferred that the system be switched immediately to the -9.5 volt source upon the detection of the loss of main feedwater, alternatively it could be arranged that the system be switched to automatic control in response to the LOW FLOW activation signal. Such an arrangement would only cause a change in operation if the system was in manual at the time of the ATWS. It would of course, result in a delay in the response of the rod system to the loss of main feedwater and a slightly higher peak pressure could be reached.

11

CLAIMS:

1. A method of operating a pressurized water reactor electric power generating system in the event of failure of its main feedwater system, said reactor having control rods and means for incrementally stepping the control rods into and out of the reactor to regulate the operating temperature and hence water pressure of the reactor with its main feedwater system adapted to supply feedwater to be converted to steam by heat generated by the reactor, characterized in that operation of the main feedwater system is monitored on a real time basis, an activation signal is generated in response to a predetermined abnormal low flow rate below a preselected valve in the main feedwater system and the control rods are stepped into the reactor at maximum speed in response to said activation signal.

2. A method according to claim 1 characterized in that the preselected value of the flow rate is a rate which is near zero.

3. A method according to claim 1 or 2, characterized in that the temperature of and the load on the reactor are monitored, the reactor is selectively operated in a manual mode wherein the rods are stepped in and out of the reactor manually and in an automatic mode wherein the rods are stepped into and out of the reactor as a function of the reactor temperature and load and the automatic mode of operation is selected in response to said activation signal.

12        0185455

4. A method of claim 3, characterized in that the rods are stepped into the reactor at a maximum rate in response to said activation signal.

FIG. I

FIG. 2

0185455

FIG. 3

( PEAK=2510 PSIA)

3/4

0185455

0185455

FIG. 4

European Patent Office

**EUROPEAN SEARCH REPORT**

**0185455**
Application number

EP 85 30 8232

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | FR-A-2 349 922 (COMBUSTION ENGINEERING INC.) * Page 15, line 34 - page 16, line 18; figure 5 * | 1 | G 21 C 9/02 G 21 C 17/02 |
| A | | 4 | |
| | --- | | |
| Y | GB-A-2 041 605 (BABCOCK) * Abstract; page 1, lines 35-54 * | 1 | |
| | --- | | |
| A | GB-A-1 086 804 (CEA) * Page 1, left-hand column, lines 10-25 * | 2 | |
| | --- | | |
| A | EP-A-0 057 453 (WEST) * Page 12, line 28 - page 13, line 31; figure 1 * | 1 | TECHNICAL FIELDS SEARCHED (Int Cl 4) |
| | ----- | | G 21 D 3/00 G 21 C 7/00 G 21 C 9/00 G 21 C 17/00 |

The present search report has been drawn up for all claims

| Place of search | Date of completion of the search | Examiner |
|---|---|---|
| THE HAGUE | 20-02-1986 | JANDL F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82